# EUROPEAN PATENT APPLICATION

(11) **EP 3 683 807 A1**
(43) Date of publication of application: **22.07.2020**
(21) Application number: 19152407.3
(22) Date of filing: 17.01.2019
(51) Int. Cl.: H01B 7/36

(54) **CABLE COMPRISING A MARKING SEQUENCE AND RELATIVE METHOD OF MARKING**

(71) Applicant: Bruno Baldassari & Fratelli S.p.A., 55013 Lammari-Capannori (LU) (IT)
(72) Inventor: BALDASSARI, Mario, 55013 Lammari-Capannori (LU) (IT)
(74) Representative: De Gregori, Antonella

(57) **Abstract**

The present invention relates to a cable comprising a marking sequence and to the relative method of marking.

## Description

The present invention relates to a cable comprising a marking sequence and to the relative method of marking.

### FIELD OF THE INVENTION

In Europe, the Construction Products Regulation n. 305/2011 (also known as CPR) came into force on 24th of April 2011, providing a new mandatory language to express the fire performance of construction products. More specifically, for cables, the CPR came into force on the 1st of July 2017.

Generally speaking, all cables used in any type of building and civil works are subject to the CPR, unless they are specifically designed for temporary installations.

The CPR only specifies the reaction-to-fire and release of dangerous substances performances of cables at the moment of placing on the market. All other characteristics to be indicated for a cable remain unaffected. Cables are tested and classified according to their performance level. They are ranked in Euroclasses ranging from A_{ca} to F_{ca}, with F_{ca} being the lowest performance. Other additional parameters are smoke opacity, flaming droplets and acidity of emissions. Said four parameters can be combined into more than 180 combinations. Each combination stands for a unique CPR classification code. This allows authorities in various countries to impose specific classifications for buildings and civil works.

To make the CPR active for cables, CENELEC (the European Standardization Body for Electric Materials) issued some standards. The most important one, which defines the procedures to CE mark the cables, is the standard EN50575:2014 + A1:2016.

The CPR imposes several obligations on manufacturers: to declare and maintain on the entire production the same level of performance; to make their product identifiable; to draw and make available the Declaration of Performance and a technical documentation in a language easily understandable by the user and then to CE mark their product under the CPR.

There are not specific obligations for installers and specifiers in the CPR, this Regulation not changing the existing obligations of installers and specifiers regarding safety and conformity of the circuits to local installation Regulations/Standards. Specifiers just should adopt the new technical language to select and specify the fire performance of cables. Installers should add the Declaration of Performance (DoP) of the cables to the usual reporting.

The Declaration of Performance is a number that identifies a document drafted according to the EU Regulation n. 305/2011 which is issued by the Cable Producer after Notified Body has performed an audit on the process and tests on the technological family to which the cable belongs and has identified the performance in relation to the CPR by associating the appropriate rank as above referred.

However, in view of the specific nature of a cable, the fulfilment of the obligation to affix the CE marking set by the CPR, which would be possible either on the product or on the packaging or on any accompanying document, is possible exclusively through labels or accompanying documents.

In fact, the specific nature of cables makes it impossible to adopt the same criteria of marking for cables of completely different size and material, to fit a huge list of information in the normal reasonable length of repetition of information on the cables, being also a priori unpredictable the tailoring required by the end customer. Art. 9 of the CPR defines in fact that the CE mark shall be followed by:
- the two last digits of the year in which it was first affixed,
- the name and the registered address of the manufacturer, or the identifying mark allowing identification of the name and address of the manufacturer easily and without any ambiguity,
- the unique identification code of the product-type,
- the reference number of the declaration of performance,
- the level or class of the performance declared,
- the reference to the harmonised technical specification applied,
- the identification number of the notified body, if applicable, and
- the intended use as laid down in the harmonised technical specification applied.

Therefore, Standard EN50575:2014 (Annex ZZ) sets the CE marking (and all the regulatory additional information) to be affixed visibly, legibly and indelibly to the product labels affixed to the reels, coils or drums of the power, control and communication cables. Cables forwarded in the original packaging already hold the proper CE marking. Besides this obligation, CE marking on cables cut-in-length is beneficial for the entire supply-chain and end-users since it makes it easier to distinguish between fully compliant vs. uncertain-source cables.

To make the information regarding CE marking available to users, in some countries (e.g. France, Sweden, Norway and Netherlands), all CPR information are added to the cable Data Base used for EDI transactions with distributors. This information is therefore available electronically. These solutions are not standardized yet and therefore not immediately extensible to all EU countries.

As above indicated, in view of the specific nature of a cable, the fulfilment of the obligation to affix the CE marking set by the CPR, in addition to all other required information about date of production, safety and conformity, is possible exclusively through labels and, as a matter of fact, is accepted using labels, because the professionals editing this Standard, has not considered feasible and/or sustainable other alternatives, or through accompanying documents as shown in the enclosed Figures 1 and 2. Further in Figure 3, the legend of all information present in a label is given.

Said solution, as a matter of fact, does not guarantee the marking to be maintained for the entire supply-chain, making also uncertain the traceability of cables cut-in-length and thus making often difficult for end-users to distinguish between fully compliant vs. uncertain-source cables.

In fact, labels and accompanying documents may get lost, especially once a cable portion having a certain length is cut and sold and a corresponding label bearing the CE marking and all other information and data is not provided with said cables cut-in-length.

So the scope of the present invention is to individuate a cable comprising a marking sequence, in particular, a cable which is for Power, Control and Communication, and which is intended to be wound on a reel or coil, overcoming the drawbacks of the cables with marking devices of the prior art.

Another scope of the present invention is to individuate a method of marking of cables able to guarantee the marking and the traceability for the entire supply-chain, making easier for end-users to check that the cable is fully compliant with the CE marking requirements, once a length of cable unwound from a reel is cut, without the need for any label or accompanying document. In fact, another scope of the invention is that the manufacturer can maintain the integrity of the required information until the final installation of the cable, not delegating to third parties, like for example a wholesaler or a retailer, who perform following steps of the productive process, carrying out, pulling and cutting the final product, to be responsible of the transmission and presence of said label or accompanying document, bearing the required information.

It is object of the present invention a cable comprising a repeated printed marking sequence which comprises one or more marks selected from an alphanumeric code, a bar-code, a Q-code, ideograms or pictograms and combinations of the same forming said marking sequence, the first mark of said printed marking sequence being spaced apart by a unit of length L from the first mark of the following printed marking sequence, this repeated printed marking sequence being intended to allow a unit having a length L of cable to be cut, wherein the complete printed marking sequence marks and identifies said unit.

Said solution has the main advantage to allow a complete traceability and marking of the cable, assuring them for the entire supply-chain, making easier for end-users to check that the cable is fully compliant with the CE marking requirements, once a length L of cable unwound from a reel is cut. It allows also avoiding the need for any label or accompanying document and the manufacturer can maintain the integrity of the required information until the final installation of the cable, not delegating to third parties, like for example a wholesaler or a retailer, to be responsible of the transmission and presence of said label or accompanying document, bearing the required information.

A further advantage of the solution according to the present invention is that by selecting the correct combination of marks, namely using a printed marking sequence with a predetermined sequence of marks and setting a complete printed marking sequence every unit length L, the "traceability" will have up to this length degree equal to L.

Each printed predetermined marking sequence of length L may also consist of two half-sequences containing the same information with the exception of the last information of the half-sequences that in the first half-sequence is the indication of the production order/lot (OP) information and/or of the production date and that in the second half-sequence is the indication of the unit length module.

Each predetermined marking sequence or the two portions of the two half-sequences of each printed predetermined marking sequence disclosing the same identical information, can consist of the same or different sequences of alphanumeric code, bar-codes, Q-code, ideograms or pictograms and combinations of the same.

Such length L is a module and may be expressed with any possible length unit measure (for example Meter, Feet, Phathom, Yards, etc. and all corresponding Multiples & Submultiples like for example: decameters etc.), allowing enough space for printing the predetermined marking sequence bearing all required information and data.

An example of L value is 1 meter, but as above said, any L module meeting the above requirement can be used.

Thus, the predetermined sequence of marks forming the marking sequence to be printed on the cable can be selected to contain all the required information according to Art. 9 of the CPR, together with the production order/lot (OP) information and/or the production date, which are fundamental to individuate the production lot and thus to individuate all information related to the launch/traceability of the internal production.

Examples of a predetermined sequence of marks forming the marking sequence to be printed on the cable can be the following:
1) BALDASSARI CAVI NF-USE 1350 REPERO® U-1000 R2V 3G1,5 Eca DoP 1002/17 NB 2479 EN50575:2014 + A1:2016 #Date DDMMHHMM; BALDASSARI CAVI NF-USE 1350 REPERO® U-1000 R2V 3G1,5 Eca DoP 1002/17 NB 2479 EN50575:2014 + A1:2016 1m;
2) BALDASSARI CAVI NF-USE 1350 REPERO® U-1000 R2V 3G1,5 Eca DoP 1002/17 NB 2479 EN50575:2014 + A1:2016 #OrderProduction; BALDASSARI CAVI NF-USE 1350 REPERO® U-1000 R2V 3G1,5 Eca DoP 1002/17 NB 2479 EN50575:2014 + A1:2016 1y.

The predetermined sequence of marks forming the marking sequence to be printed on the cable are different for each unit of length L of the cable.

In fact, the predetermined sequence of marks forming the marking sequence to be printed comprises also the indication of the unit length module and thus all printed sequences are different. For example a cable wound on a reel having a length of 5000m and with a L value equal to 1 m, will be printed with 5000 different sequences, the first sequence bearing the value 1m at the end of the sequence, namely after 1m, the second sequence bearing the value 2m, the third sequence bearing the value 3m, etc. The same in case of a cable reel having a length of 1000 Yards and with a L value equal to 1 Yard. The cable is printed with 1000 different sequences, the first bearing the value 1y at the end of the sequence, the second bearing the value 2y, etc.

Advantageously, the predetermined sequence of marks forming the marking sequence to be printed on the cable may be characterised by having marks in different colours.

Preferably, this marking sequence is printed on a cable which is for Power, Control and Communication and which is intended to be wound on a reel. Said cable can have a section with a cylindrical or parallelepiped shape or sections with a similar shape (triangular sector, elliptical..... etc.).

A cutting mark may be arranged between two printed marking sequences, for example before the first mark of a predetermined marking sequence to cut the cable in units having a length equal to L, each unit bearing a complete printed marking sequence that marks and identifies said unit.

The invention also relates to a method for printing a marking sequence which comprises one or more marks selected from an alphanumeric code, a bar-code, a Q-code, ideograms or pictograms and combinations of the same forming said predetermined marking sequence, wherein the marking sequence is printed with the first mark of said printed marking sequence spaced apart by a unit of length L from the first mark of the following marking sequence to be printed, characterized in that the printing of the marking sequences on the cable is carried out by embossing, high relief or bas relief embossing, by ink-transfer or ink-jet printing, by photoimpression, by laser, both removal and burn laser printing.

### Brief Description of the Drawings

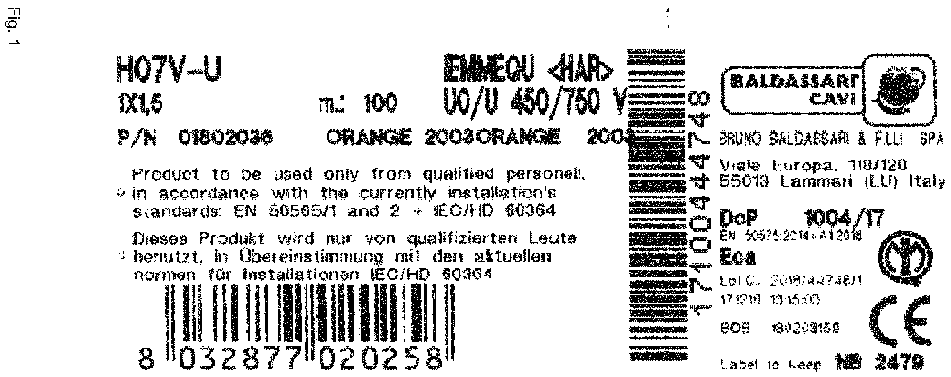

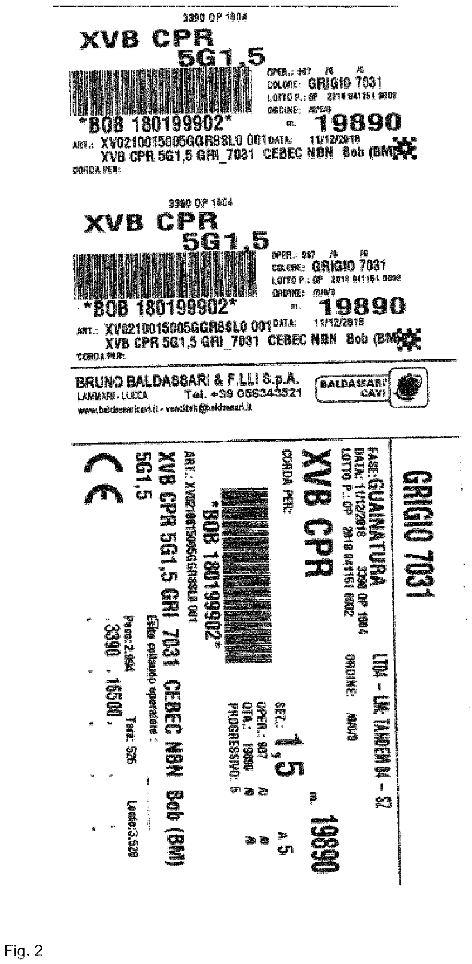

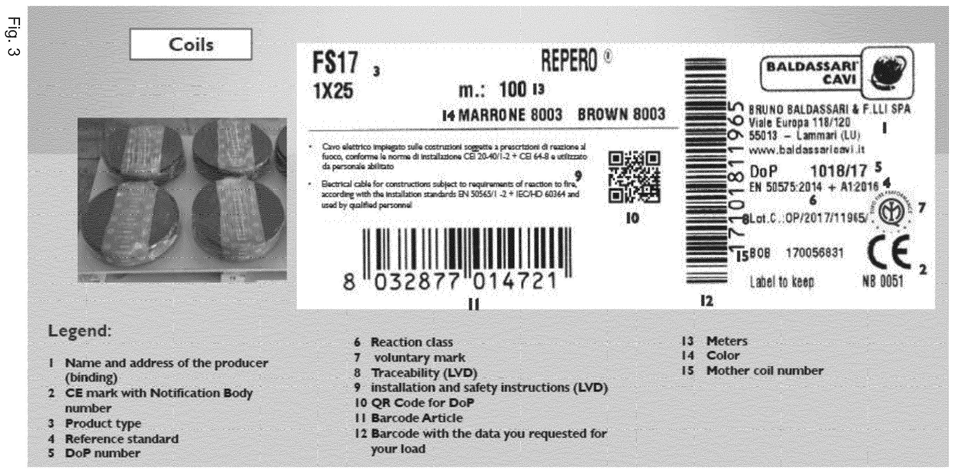

The invention is described below in greater detail with reference to figures illustrating only some preferred embodiments of the invention.
As already previously indicated, Figures 1-3 represent labels according to the state of the art;

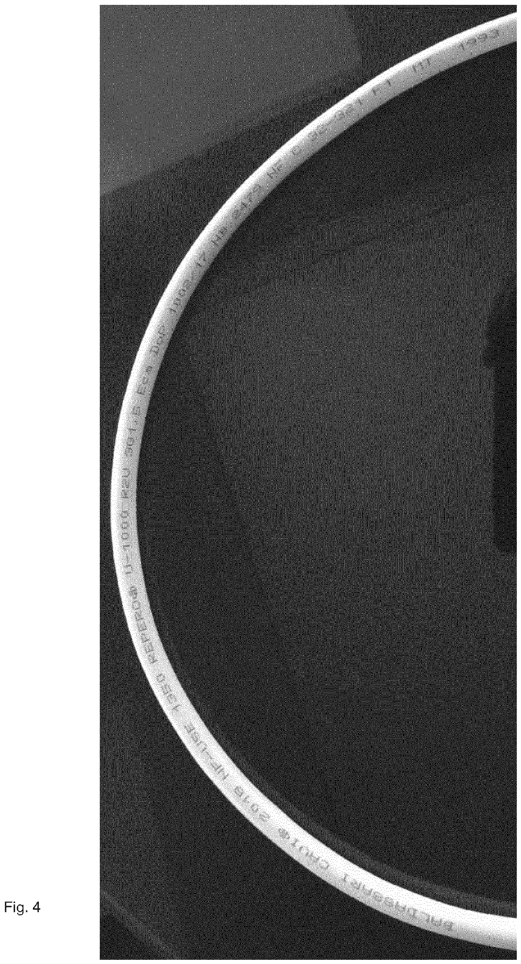

Figures 4-7 are photographs of cables, unwound from a reel, showing printed marking sequences or half-sequences according to the present invention.

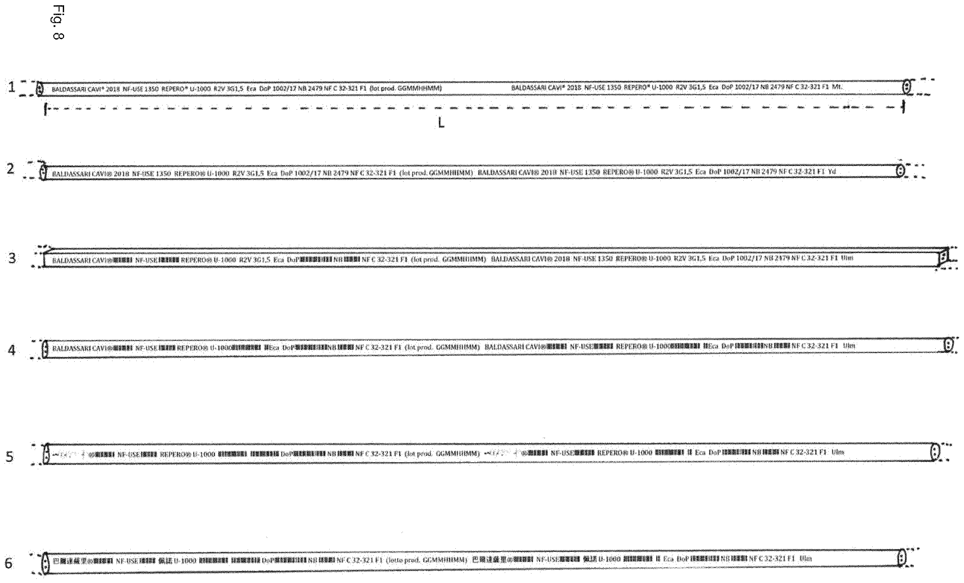

Figure 8 represents some examples of possible predetermined marking sequence printed on the cables.

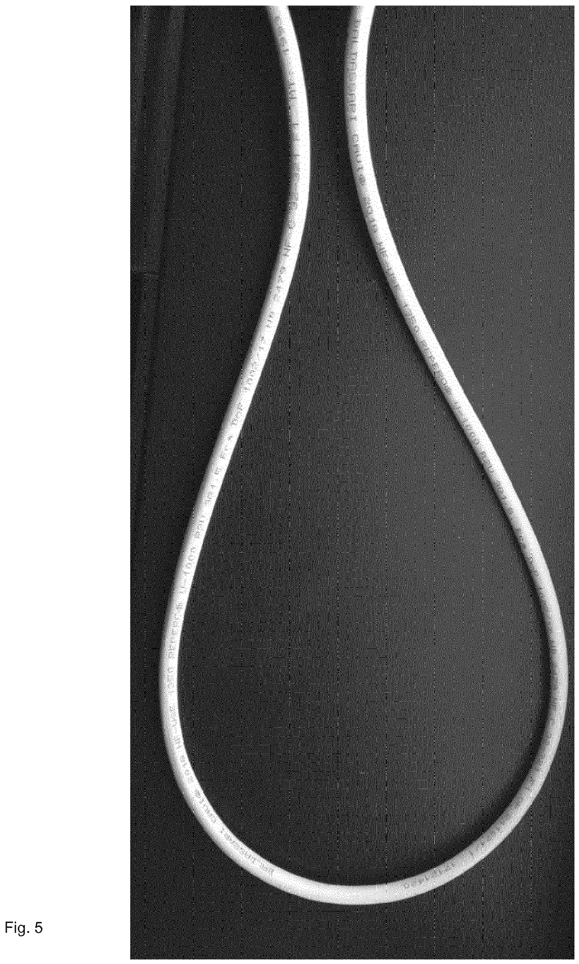

As illustrated in Figures 4 and 5, in accordance with the invention, the marking sequence of a cable comprises a sequence of marks consisting of a combination of alphanumeric codes. In figure 4 it is represented the first half-sequence of the marking sequence of length L of Figure 5.

As evident from Figure 5 the two-half-sequences forming said printed marking sequence have a length L. This printed marking sequence allows a unit having a length L of cable wound on a reel to be cut, said unit being characterised by the presence of the complete printed marking sequence marking and identifying the cable. So each unit of length L contains all the required information according to Art. 9 of the CPR, together with all OP information and the production date, which is fundamental to individuate the Production Lot and thus to individuate all information related to the launch/traceability of the internal production.

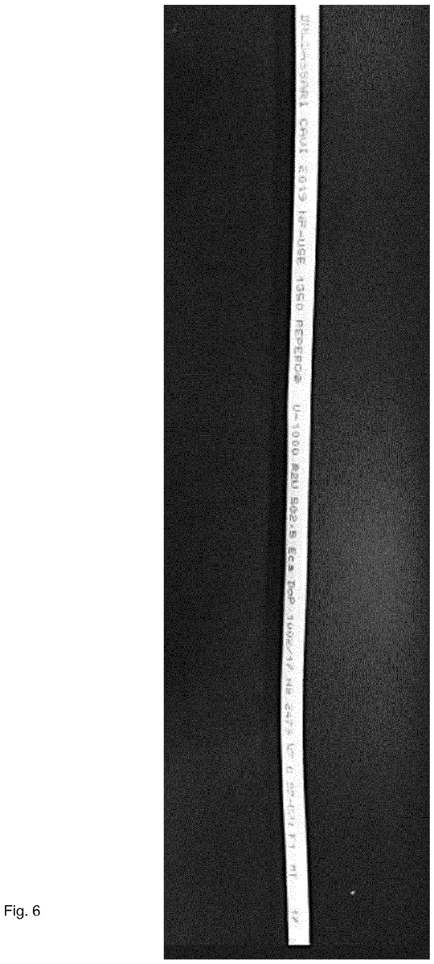

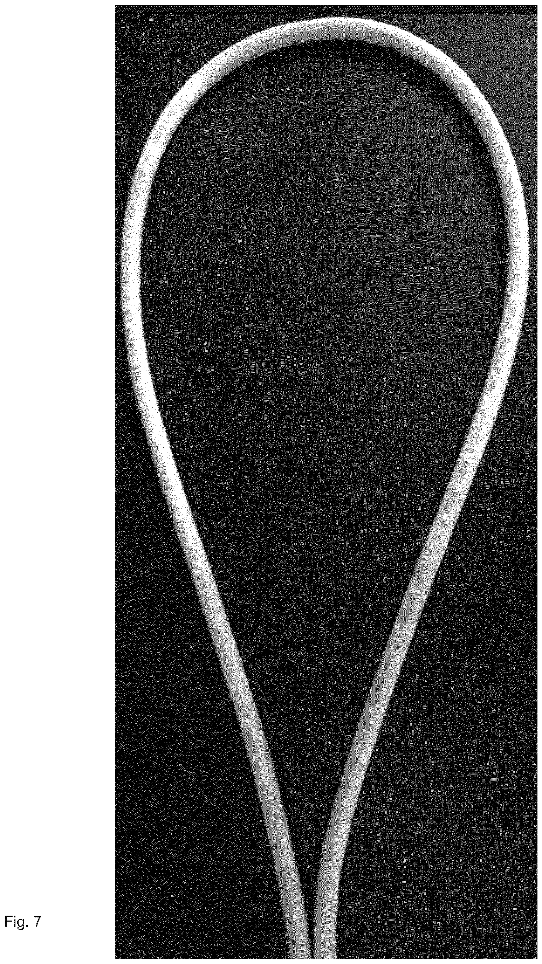

As illustrated in Figures 6 and 7, in accordance with the invention, the marking sequence of a cable comprises a different sequence of marks consisting of a combination of alphanumeric codes. In figure 6 it is represented the first half-sequence of the marking sequence of length L of Figure 7.

As evident from Figure 7 the two-half-sequences forming said printed marking sequence have a length L. This printed marking sequence allows a unit having a length L of cable wound on a reel to be cut, said unit being characterised by the presence of the complete printed marking sequence marking and identifying the cable. So each unit of length L contains all the required information according to Art. 9 of the CPR, together with all OP information and the production date, which is fundamental to individuate the Production Lot and thus to individuate all information related to the launch/traceability of the internal production.

Figure 8 discloses six examples of possible marking sequences:
- example 1 and example 2 have the same marking sequences, having a different length L (unit length module of 1 metre or 1 yard, respectively); the marking sequence consists of two half-sequences with a combination of alphanumeric codes;
- example 3 discloses a marking sequence of length L (unit length module=ulm); the first half-sequence consists of a combination of alphanumeric codes and bar codes, while the second half-sequence presents the same information with a combination of alphanumeric codes;
- example 4 discloses a marking sequence of length L (unit length module=ulm); the first half-sequence consists of a combination of alphanumeric codes and bar codes, while the second half-sequence presents the same information with a different combination of alphanumeric codes and bar codes; such different combinations are thus printed on the units of the cable, depending on the specification needs;
- example 5 discloses a marking sequence of length L (unit length module=ulm); the first half-sequence consists of a combination of alphanumeric codes, bar codes and pictograms, while the second half-sequence presents the same information with a different combination of alphanumeric codes, bar codes and pictograms; different combinations are thus printed on the units of the cable, depending on the specification needs;
- example 6 discloses a marking sequence of length L (unit length module=ulm); the first half-sequence consists of a combination of alphanumeric codes, bar codes and ideograms, while the second half-sequence presents the same information with a different combination of alphanumeric codes, bar codes and ideograms; different combinations are thus printed on the units of the cable, depending on the specification needs.

In figure 8, the cables of examples 1, 2 and 4-6 have a section with a cylindrical shape, while the cable of example 3 has a section with a parallelepiped shape.

Where ever it is used, the word "comprising" is to be understood in its "open" sense, that is, in the sense of "including", and thus not limited to its "closed" sense, that is the sense of "consisting only of'. A corresponding meaning is to be attributed to the corresponding words "comprise", "comprised" and "comprises" where they appear.

It will be understood that the invention disclosed and defined herein extends to all alternative combinations of two or more of the individual features mentioned or evident from the text. All of these different combinations constitute various alternative aspects of the invention.

While particular embodiments of this invention have been described, it will be evident to those skilled in the art that the present invention may be embodied in other specific forms without departing from the essential characteristics thereof. The present embodiments and examples are therefore to be considered in all respects as illustrative and not restrictive, and all modifications which would be obvious to those skilled in the art are therefore intended to be embraced therein.

## Claims

1. A cable comprising a repeated printed marking sequence which comprises one or more marks selected from an alphanumeric code, a bar-code, a Q-code, ideograms or pictograms and combinations of the same forming said marking sequence, the first mark of said printed marking sequence being spaced apart by a unit of length L from the first mark of the following printed marking sequence, this repeated printed marking sequence being intended to allow a unit having a length L of cable to be cut, wherein the complete printed marking sequence marks and identifies said unit.

2. The cable according to claim 1, wherein each printed predetermined marking sequence of length L is different from the following one, bearing a different unit length module number.

3. The cable according to any one of the previous claims, wherein each printed predetermined marking sequence of length L consists of two half-sequences contains the same information with the exception of the last information of the half-sequences that in the first half-sequence is the indication of the production order/lot (OP) information and/or of the production date and that in the second half-sequence is the indication of the unit length module.

4. The cable according to claim 3, wherein the two portions of the two half-sequences of each printed predetermined marking sequence, disclosing the same identical information, consist of the same or different sequences of alphanumeric code, bar-codes, Q-code, ideograms or pictograms and combinations of the same.

5. The cable according to any one of the previous claims, wherein the predetermined sequence of marks forming the marking sequence to be printed on the cable has marks in different colours.

6. The cable according to any one of the previous claims, wherein the marking sequence is printed on a cable which is for Power, Control and Communication-and which is intended to be wound on a reel.

7. The cable according to any one of the previous claims, wherein the cable has a section having a cylindrical or a parallelepiped shape or sections having similar shapes.

8. The cable according to any one of the previous claims, wherein a cutting mark is arranged between two printed marking sequences, before the first mark of a predetermined marking sequence to cut the cable in units having a length equal to L, each unit bearing a complete printed marking sequence that marks and identifies said unit.

9. The cable according to any one of the previous claims, wherein each unit of length L is traceable.

10. A method for printing a marking sequence according to any one of claims 1-9, wherein the marking sequence is printed with the first mark of said printed marking sequence spaced apart by a unit of length L from the first mark of the following marking sequence to be printed, **characterized in that** the printing of the marking sequences on the cable is carried out by embossing, high relief or bas relief embossing, by ink-transfer or ink-jet printing, by photoimpression, by laser, both removal and burn laser printing.
